# NEW EUROPEAN PATENT SPECIFICATION

(11) **EP 0 241 893 B2**
(45) Date of publication and mention of the opposition decision: **17.04.1996**
(45) Mention of the grant of the patent: 05.06.1991
(21) Application number: 87105432.6
(22) Date of filing: 13.04.1987
(51) Int. Cl.: F02F 11/00, F16J 15/12

(54) **Head gasket assembly for closely adjacent cylinder bores and method for making same**
Zylinderkopfabdichtung für dicht benachbarte Zylinder und Verfahren zu ihrer Herstellung
Joint de culasse pour des cylindres voisins adjacents et méthode pour la fabrication de ce joint

(30) Priority: 14.04.1986 US 851471
(43) Date of publication of application: 21.10.1987
(73) Proprietor: FEL-PRO INCORPORATED, Skokie Illinois 60076 (US)
(72) Inventor: Rosenquist, Gerald A., Mundelein Illinois 60060 (US)
(74) Representative: Strehl Schübel-Hopf Groening & Partner

(56) References cited:
- DE-A- 2 604 253
- DE-C- 1 294 102
- GB-A- 1 278 321
- US-A- 1 843 297
- US-A- 3 532 349
- US-A- 4 243 231
- US-A- 4 369 980
- US-A- 4 480 844

## Description

The present invention is related to a head gasket assembly for sealing communication with an engine block having at least two closely spaced cylinder bores and a head of engines, especially in racing engines, in accordance with the pre-characterizing portion of claim 1.

A head gasket assembly of the type as disclosed in the introductory portion of claim 1 is shown in GB-A-1,278,321 which shows a gasket for an internal combustion engine wherein the gasket body has formed therein two openings, two eyelets are located one in each opening and each having flanges engaging opposite faces of the gasket body at the regions thereof surrounding the respective opening and wherein the gasket body material is absent from a region between the eyelets in which region is located a metal reinforcing member engaged on opposite faces by the flanges of each eyelet. Where the eyelets are closest to one another their lower flanges are shaped to support a solid steel bridge reinforcement clamped by its opposite parallel faces between the upper and lower flanges of the adjacent parts of the eyelets. The reinforcement can be extended tangentially to embrace apertures for cooling liquid to enable heat to be conducted quickly from the eyelets to the cooling liquid.

US-A-4,480,844 discloses a cylinder head gasket including a variable thickness fire ring affixed to a cylinder aperture therein. The ring counteracts the tendency for load distribution in cylinder head areas to vary as a function of bolt spacing and the amount of load or clamping force applied to the cylinder head of an engine. The ring incorporates a thickness gradient determined by desirable unit load around the cylinder head areas. In a preferred embodiment, the ring has a minimum thickness at a point most proximal to a bolt aperture, while having a maximum thickness at a point equidistant to bolt apertures. Also, in a preferred embodiment, the variable thickness ring is chemically bonded to the cylinder aperture or has a wrap providing a structural a attachment to a gasket body.

Us-A-3,532,349 discloses a cylinder head gasket for sealing the cylinder head on the block of a high compression ratio internal combustion engine. The gasket contains fire rings for sealing the combustion chamber gases and a body for sealing fluids in the engine, which body is composed of compressible material which when clamped between the head and block of the engine is compressed sufficiently to have relaxation so low that the loss of torque on the clamping bolts remains below 10% and retorquing of the engine is not required.

US-A-4,243,231 discloses a gasket assembly which is reinforced by a grommet in combination with a graphite sheet, comprising a gasket base sheet with a plurality of holes and having the area between adjacent holes cut out. A graphite sheet is mounted in said cut out area between the adjacent holes and has a lamellar crystalline structure. The grommet is mounted on the peripheral edge of said holes and attached to said graphited sheet. This assembly is to be used in multi-cylinder internal combustion engines having been manufactured with a very small distance between the cylinders. This structure shall avoid the disadvantages of one body gaskets causing a deterioration of the gasket by the heat of combustion when in use and, as a consequence of this, leakage of gas between the adjoining or adjacent cylinder bores resulting in loss of the sealing function and the gasket. The graphite sheet is a compressed graphite powder.

DE-A-12 94 102 discloses a head gasket comprising a ring consisting of a helical spring which has a comparatively flat characteristic curve and which is partially enclosed by means of an armoring having a C-shaped cross section. The spiral ring is connected to a known soft material sealing and is plastically and/or elastically preformed in a direction normal to the sealing surface.

US-A-1,843,297 is related to a gasket comprising a body having openings, an annular wire seating member adjacent to each of said openings and double walled annular holding means for gripping said wire to secure it to said body portion, the outer circumferences only of said double walls engaging opposite sides of said body. There are provided sealing elements about the openings in the body of the gasket made of soft metal rings and metal retaining means which are applied for holding the rings in place and are compressible with the rings. Furthermore, means are provided at the marginal edge to reinforce and strengthen the gasket.

US-A-4,369,980 describes a cylinder head gasket having a double metal wrapped hoops providing a reinforced fire ring around the combustion chamber. The inner hoop is the larger hoop to carry the clamping load and form a positive seal while the outer hoop reinforces the inner hoop.

DE-A-26 04 253 discloses a gasket having a loading means consisting of a ring being positioned at the edge of a cylinder opening. The ring is mounted within an armoring. The wall of the ring has a vertical cross-section before compression of which the width is greater than its depth. According to one embodiment, the ring having a circular cross-section can be flattened before the assembly of the gasket. Furthermore, there can be provided a second ring having a circular cross-section, to receive a differential load or a different load along the armoring.

One of the concerns with a head gaskets where bores are closely adjacent is that the gasket body portion disposed between the bores is relied on to provide a seal and, where armoring is used, to mount the armor, thereby to provide an effective seal. As the width of the gasket between the bores decreases, the gasket body becomes increasingly fragile. Thus, it may break away altogether, or, if it is a typical laminated gasket body it may delaminate and thereby become ineffective for the sealing functions for which it was designed.

Therefore, head gaskets having improved sealing capacities particularly gaskets for engines in which the cylinder bores are closely adjacent, are to be desired.

### Summary of the invention

In accordance with the present invention an improved head gasket assembly according to claim 1 for an internal combustion engine is provided with the features of the characterizing portion of claim 1.

The head gasket assembly comprises a generally flat main gasket body for sealing communication with at least two complimentary cylinder bores in an engine block.

The gasket body defines at least one pair of adjacent combustion openings. The gasket body defines an elongate zone of adjacency between a pair of combustion openings from which gasket body material is absent. Armoring is provided for the combustion openings and comprises a pair of amor sections connected by a bridge in the zone of adjacency. The armor sections each include an upper leg and a lower leg to define, in cross-section, a U-shaped annulus for sealing the peripheries of the combustion openings.

A wire is disposed in each amor section. The wires lie in close proximity to each other in the zone of adjacency. Prior to compression the wires are greater in thickness by at least about 10 to 20% than the thickness of the gasket body. The wire rings are spaced from each other in the zone of adjacency prior to compression. After compression they are in sealing engagement with each other.

In one form, the lower legs of the armor sections are in butting relationship in the zone of adjacency. In a preferred form the lower legs of the armor sections are in an overlapping relationship in the zone of adjacency, thereby to produce a higher sealing stress in the zone of the overlapping relationship.

The wires are of a relatively soft metal having a high heat conductivity, such as copper. The wires are generally circular or, in some applications, oval in cross-section prior to compression. The wires, prior to compression, are substantially greater in thickness or diameter than the thickness of the main body portion.

Gaskets in accordance with this invention permit the cylinder bores of internal combustion engines to be more dosely spaced, which providing effective seals at and around combustion cylinders.

Further objects, features and advantages of the invention will become apparent from the following description and drawings.

### Brief Description of the Drawings

Figure 1 is a plan view of a head gasket in accordance with the present invention ;
Figure 2 is an enlarged, fragmentary view of Figure 1, partially broken away, showing a pair of adjacent combustion openings;
Figure 3 is cross-sectional view taken substantially along line 3-3 of Figure 1;
Figure 4 is a cross-sectional view, like Figure 3, but after compression;
Figure 5 is a cross-sectional view taken substantially along line 5-5 of Figure 2;
Figure 6 is a cross-sectional view of a further embodiment taken in the same location as that shown by line 3-3 of Figure 1;
Figure 7 is a cross-sectional view, like Figure 6, but after compression;
Figure 8 is a cross-sectional view of a prior art head gasket construction as though taken substantially at the location of line 3-3 of Figure 1;
Figure 8A is a cross-sectional view of a typical prior art armoring utilizing a wire: and
Figure 9 is a schematic side elevational view of an engine assembly in which the gasket of Figure 1 may be used.

### Description of the Preferred Embodiment

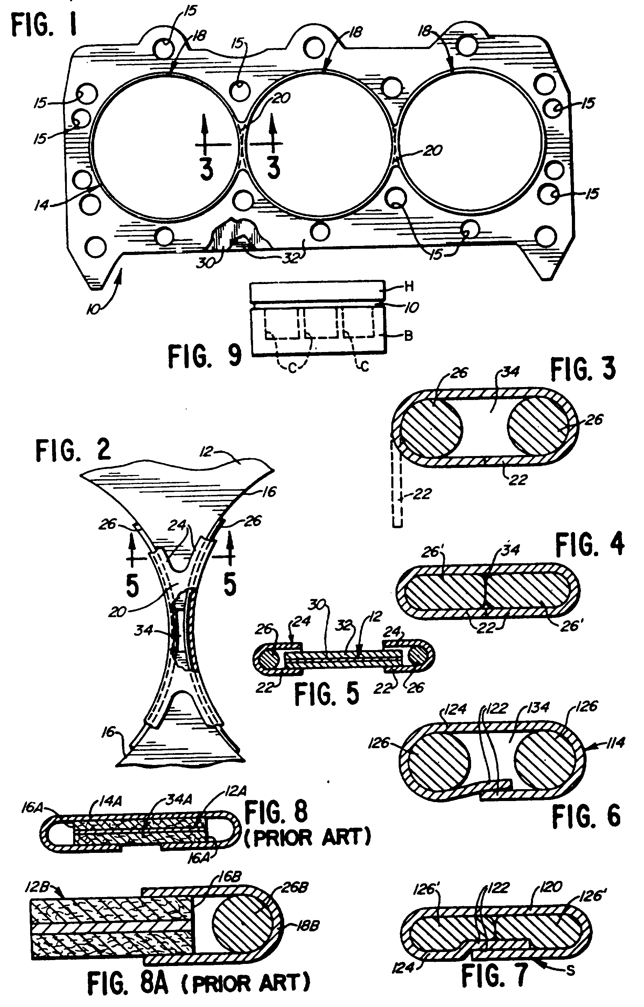

Referring first to Figures 1-5, a head gasket assembly 10 of the present invention is seen to comprise a generally flat main gasket body 12 which defines a plurality of combustion openings 16, suitable oil, water and bolt openings 15, and armoring 14 for the combustion openings 16. In Figure 1 a head gasket assembly having three combustion openings 16 is shown for sealing communication with an engine block B having cylinder bores C and a head H, see Figure 9, typically for one side of a V-6 engine. Thus, the head gasket assembly armoring 14 may be desirably formed to cooperate with three combustion openings. It is dear that any multiple cylinder engine where at least one pair of cylinder bores are dosely adjacent to each other will benefit from the practice of the present invention.

As best seen in Figures 1 and 2 the armoring 14 comprises three circular armor sections 18. Each section 18 merges in a zone adjacent to the next adjacent armor section in a bridge 20. Bridges 20 connect the sections to form a unitary series of armor sections 18 comprising armoring 14.

Prior to assembly with the main body 12, each of the armor sections 18 defines a lower leg 22 which extends generally vertically away from the bridge 20 and the upper leg 24 of the armor section (see Figure 2). When in that position, the armor sections are adapted to receive the wires 26 which, in the zones of adjacency 34 are spaced but in close proximity to each other. The wires 26 are circular in cross-section. The assembled armor sections and wires are adapted to be juxtaposed with the gasket body 12, following which the lower legs 22 are bent over to define U-shaped annuli about the peripheries of the combustion openings 16, thereby to secure the armoring 14 to the main body 12, generally as illustrated by Figure 5, to provide an integrated head gasket assembly 10. In the embodiment shown the combustion openings 16 are generally circular. As such the armor sections 18 which sealingly embrace the peripheries of the openings are also generally circular.

The main gasket body 12 typically comprises a laminates such as of an imperforate metallic core 30, and a pair of facing sheets 32. Facing sheets 32 are a fiber reinforced composite and are laminated to core 30. The most popular and frequently used facings incorporate asbestos or glass fibers and utilize nitrile, neoprene or polyacrylic elastomers to provide the self-sustaining facings. In the embodiment illustrated, the facings may have a thickness of about 0.015 inch, although, of course, this may vary with the application. Facing sheets 32 generally resist degradation by oils and coolants, retain torque, minimize extrusion, and exhibit heat resistance.

The main gasket body 12 is die cut or blanked out, such as with a stamping machine, punch press or other suitable form of equipment to provide three combustion openings, bolt holes 15 and a plurality of fluid flow passageways, such as oil and water passageways 15. A typical gasket assembly body having the configuration shown in Figure 1 has a thickness of about 0.043 inch. Other configurations and thicknesses may be used depending upon the configuration and requirements of the engines with which the gasket assembly is to be used.

From Figures 2 and 3 especially, it will be apparent that the main gasket body has a small portion cutout in the zone of adjacency of pairs of cylinder bores C. The absence of the body material in this narrow, elongated zone of adjacency 34 makes it possible, as will appear, effectively and consistently to produce gasket assemblies 10 which will seal the closely adjacent combustion openings 16.

The wires 26 are substantially oversized as compared to typical wires used in armored head gaskets. Indeed prior to compression the armoring 14 is also initially substantially oversized as compared to the typical armoring of armored head gaskets. In this regard Figures 8 and 8A, showing prior art, are instructional.

In Figure 8, a typical automotive head gasket used in the same environment as Figure 1 is shown, i.e., at the location of Figure 3. As there seen, there are no wires and the main gasket body 12A continues across the zone of adjacency of adjacent combustion openings 16A. When the width of the zone of adjacency 34A diminishes, the body 12A thereat tends to delaminate or fracture. This limits the minimum spacing permissible and may also result in main gasket bodies which may fracture from time to time. Also, as seen in Figure 8, the armoring 14A dosely grips the main body 12A, the main body 12A, in the zone of adjacency 34A, initially having approximately the same thickness as the gasket as seen in Figure 8, and substantially the same thickness as the overall main gasket body 12A.

In Figure 8A, a typical prior art gasket assembly using armoring and a wire-ring is shown. There the armor 18B houses a wire 26B which grips the periphery of a combustion opening 16B. The final thickness of the armor and wire is slightly greater than the thickness of the main gasket body 12B, the diameter of the wire ring 26B initially being no more than, and preferably less than, the thickness of the main body 12B.

By contrast with such prior art, several things will be apparent. First, the zone of adjacency 34 is deliberately cut-out from the main gasket body 12 leaving an open space between adjacent combustion openings 16, as seen in Figures 2 and 3. Next, the armoring, in the zone of the bridge 20 and in the zone of adjacency 34, houses a pair of annular wires 26, which may be butt-welded, one for each of the combustion openings 16. Additionally, the wires 26 are substantially oversized, i.e., are substantially greater in thickness than the thickness of the main gasket body, preferably by at least about 10 to 20%. Indeed, as shown by Figure 5 the wires are much greater in thickness than the main gasket body, in which event in the zone of adjacency and in the zone of the bridge, as well as elsewhere, at least one of the legs-22 and 24 of the armoring 14 will stand off somewhat from the main body 12.

Following assembly of the gasket it is precompressed from the condition shown in Figures 3 and 5, to the condition shown in Figure 4, i.e., the wires are deformed to assume a relationship typified by Figure 4, thereby to deform the wires into sealing engagement with each other in the zone of adjacency. The precompression of the gasket assembly functions to reduce possible bolt torque loss, thereby to produce a gasket which provides a longer-lived, more durable seal.

When the thusly formed gasket assembly is thereafter positioned between a head H and block B, and is torqued down, the precompressed gasket assembly 10 is further compressed and the wires 26 may be further deformed to further alter the shape of the wires, again as illustrated by Figure 4. It will be appreciated that the wires therefore, are reasonably malleable, and to that end wires, such as cooper wires or the like, are preferred. Indeed softer wires of a relatively soft metal such as copper which also have a high heat conductivity are used because they will perform the additional function of transferring heat from the zone of the combustion openings outwardly to be dissipated, thereby minimizing the possibility of high heat damage to the main gasket body 12 in use.

It will be appreciated that malleable wires such as copper do not normally serve as effective wires in fire rings. Because the soft copper wire is trapped in the zone of adjacency 34, it functions to cooperate to produce a highly effective fire ring at the zones of adjacency.

The wires 26 are deformed to produce sealing contact or engagement between them, particularly in the zone of adjacency 34, as is illustrated by Figure 4. As such, despite the absence of the main gasket body 12 in the zone of adjacency 34, an effective seal in that zone for each combustion opening 16 is provided, while additionally providing an effective seal around the entirety of each combustion opening.

It will be apparent that there will be a generally uniform sealing load distribution across the width of the amoring in the zone of adjacency 34 in the embodiment of Figures 1-5. To increase the unit loading stress, particularly in the central portion of the zone of adjacency 34, may well be desirable in some circumstances, and Figures 6 and 7 illustrate an embodiment by which that may be accomplished.

Referring now to Figures 6 and 7, it will be seen that an armoring 114 is provided with a connecting bridge portion 120 in the zone of adjacency 134 of a pair of combustion openings. A wire 126 for each combustion opening is provided. The upper legs 124 which merge in the zone of the bridge 120 is formed with a pair of lower legs 122 which are in an overlapping relationship instead of the butting relationsnip as was the case in the zone of adjacency 34 of Figures 3 and 4. As the gasket assembly employing the embodiment of Figures 6 and 7 is compressed from the initially assembled position of Figure 6 to that of Figure 7, to produce deformed, compressed wire rings 126, greater sealing stresses develope in the central zone S of overlapping relationship thereby producing an enhanced seal in the zone of adjacency, the zone where the main gasket body is absent.

Gaskets in accordance with the present invention are especially useful in racing engines where maximum bore size tends to be desirable. Such gaskets, however, are useful in other environments as well.

It has been found that a minimum of 0.21 inch appears necessary between adjacent combustion openings when gaskets of the laminated type are used and the gaskets employ plain armored or wire ring head gaskets, all to allow for armor overlap, dearance between adjacent armors, to provide space for wire and back dearance, as well as to prevent breaking off of part of the narrow land area betwen the combustion openings. With gaskets of the present design the space may be as little as about 0.14 inch, allowing a bore diameter of 0.07 inch larger.

The wires used may be copper of a diameter of 0.052 inch which is greater than the thickness of the body. This, in the construction illustrated and described, will provide combustion seals strong enough to resist the compressive forces that occur between the combustion openings.

In the embodiment illustrated, the combined cross-sectional area of the two wires in the zone of adjacency is 30% greater than the cross-sectional area of the estimated armor shape at the minimum calculated compressed thickness. This insures substantially complete filling of the gap between the inside of each armor, forcing excess material into the voids created by the removal of the portion of the gasket body in the zone of adjacency. Where the overlapping armors in the zone of adjacency are used, not only does that aid compressive stress, producing greater unit sealing stress, but it also tends to cover the wires more completely.

## Claims

1. A head gasket assembly (10) for sealing communication with an engine block (B) having at least two closely spaced cylinder bores (C) and a head (H) of engines, especially in racing engines, comprising
- a generally flat main gasket body (12) of a laminated type which defines at least one pair of closely spaced combustion openings (16) therein,
- said main gasket body (12) defining an elongate zone of adjacency (34) of said pair of combustion openings (16) from which gasket body material is absent;
- armoring (14) for said combustion openings (16) comprising a pair of circular armor sections (18) connected by a bridge (20) in said zone of adjacency (34);
- said armor sections (18) including an upper leg (24) and a lower leg (22) to define, in cross-section, a U-shaped annulus for sealing of the peripheries of said combustion openings (16) to secure the armoring (14) to the main body (12) to provide an integrated head gasket assembly; the number of said sections (18) corresponds to the number of combustion openings (16);
characterized by
- an annular wire (26) of circular cross-section prior to compression disposed in each of said assembled armor sections (18) which are initially substantially oversized compared with the thickness of the main gasket body; said wires (26) in the zone of adjacency (34) and in the zone of the bridge (20) are spaced from each other but in close proximity to each other;
- said wires (26), prior to compression, having a relatively high malleability and a high heat conductivity are at least about 10 to 20% greater in thickness than the thickness of the main gasket body (12), so that in the zone of adjacency (34) and in the zone of the bridge (20) as well as elsewhere, at least one of the legs (22, 24) of the armoring (14) stand off somewhat from the main gasket body (12);
- such that following the assembly of the gasket, the wires (26) are deformed by pre-compression into sealing engagement with each other in the zone of adjacency (34) providing an effective seal in the zone of adjacency (34);
- said wires (26) are in sealing engagement with each other after compression, so that the space between adjacent combustion openings (16) may be as little as about 3.56 mm (0.14 inch).

2. A head gasket assembly in accordance with claim 1, wherein said lower legs (22) of said armor sections are in butting relationship in said zone of adjacency (34).

3. A head gasket assembly in accordance with claim 1, wherein said lower legs (22) of said armor sections (18) are in an overlapping relationship in said zone of adjacency (34), thereby to produce a higher sealing stress in the zone of said overlapping relationship.

4. A head gasket assembly in accordance with claim 1 wherein said wires (26) are of copper.

## Patentansprüche

1. Zylinderkopfdichtung (10) für die abdichtende Verbindung mit einem Motorblock (B), der mindestens zwei nahe beieinander liegende Zylinderbohrungen (C) und einen Zylinderkopf (H) von Motoren, insbesondere Rennmotoren aufweist, bestehend aus
- einem im allgemeinen flachen Hauptdichtungskörper (12) laminierter Bauart, der mindestens ein Paar dicht benachbarter Verbrennungsöffnungen (16) enthält,
- wobei der Hauptdichtungskörper (12) eine sich längs erstreckende Nachbarzone (34) des genannten Paares Verbrennungsöffnungen (16) aufweist, in der das Dichtungskörpermaterial fehlt;
- einer Armierung (14) für die Verbrennungsöffnungen (16), umfassend ein Paar kreisförmiger Armierungsabschnitte (18), die durch eine Brücke (20) in der Nachbarzone (34) miteinander verbunden sind;
- wobei die Armierungsabschnitte (18) einen oberen Schenkel (24) und einen unteren Schenkel(22) umfassen, um einen im Querschnitt U-förmigen Ring zur Abdichtung der Umfänge der Verbrennungsöffnungen (16) zu bilden, um die Armierung (14) an dem Hauptdichtungskörper (12) zu befestigen und eine integrierte Zylinderkopfdichtung bereitzustellen; die Anzahl dieser Abschnitte (18) entspricht der Anzahl der Verbrennungsöffnungen (16);
dadurch gekennzeichnet, daß
- ein ringförmiger Draht (26) kreisförmigen Querschnitts vor der Kompression in jedem der zusammengesetzten Armierungsabschnitte (18) angeordnet ist, die anfänglich, verglichen mit der Dicke des Hauptdichtungskörpers, wesentlich größer sind; wobei die Drähte (26) in der Nachbarzone (34) und in der Brückenzone (20) voneinander beabstandet jedoch dicht beieinander liegen;
- die Drähte (26) vor der Kompression eine relativ hohe Verformbarkeit und hohe Wärmeleitfähigkeit aufweisen und mindestens etwa 10 bis 20 % dicker sind als die Dicke des Hauptdichtungskörpers (12), so daß in der Nachbarzone (34) und in der Brückenzone (20) sowie auch anderswo, mindestens einer der Schenkel (22, 24) der Armierung (14) etwas vom Hauptdichtungskörper (12) absteht;
- so daß nach dem Zusammenbau der Dichtung die Drähte (26) durch Vorkompression in eine gegenseitige, abdichtende Anlage in der Nachbarzone (34) verformt werden und damit eine wirksame Dichtung in der Nachbarzone (34) bilden;
- die Drähte (26) nach der Kompression dicht aneinander liegen, so daß der Abstand zwischen den benachbarten Verbrennungsöffnungen (16) so klein wie etwa 3,56 mm (0.14 inch) sein kann.

2. Zylinderkopfdichtung nach Anspruch 1, bei der die unteren Schenkel (22) der Armierungsabschnitte in der Nachbarzone (34) gegeneinander stoßen.

3. Zylinderkopfdichtung nach Anspruch 1, bei der die unteren Schenkel (22) der Armierungsabschnitte (18) sich in der Nachbarzone (34) überlappen und dadurch eine höhere Dichtungsbeanspruchung in dem Überlappungsbereich hervorrufen.

4. Zylinderkopfdichtung nach Anspruch 1, bei der die Drähte (26) aus Kupfer bestehen.

## Revendications

1. Ensemble joint de culasse (10) destiné à fermer hermétiquement la communication avec un bloc moteur (B) ayant au moins deux alésages de cylindres (C) étroitement rapprochés et une culasse (H) de moteur, spécialement dans des moteurs de course, comprenant :
- un corps principal de joint (12) de forme générale plate, d'un type stratifié qui définit au moins une paire d'ouvertures de combustion (16) étroitement rapprochées,
- ledit corps principal de joint (12) définissant une zone allongée de proximité (34) de ladite paire d'ouvertures de combustion (16) dans laquelle la matière du corps de joint est absente ;
- un renforcement (14) pour lesdites ouvertures de combustion (16), comprenant une paire de sections de renforcement circulaires (18) reliées par un pont (20) dans ladite zone de proximité (34) ;
- lesdites sections de renforcement (18) comprenant une branche supérieure (24) et une branche inférieure (22) pour définir, en section transversale, un anneau à profil en U qui sert à fermer hermétiquement les périphéries desdites ouvertures de combustion (16) pour fixer le renforcement (14) audit corps principal (12) afin de réaliser un ensemble joint de culasse intégré ; le nombre desdites sections (18) correspond au nombre des ouvertures de combustion (16) ;
caractérisé par
- un fil métallique annulaire (26) de section transversale circulaire avant la compression, disposé dans chacune desdites sections de renforcement (18) assemblées, lesquelles sont initialement sensiblement surdimensionnées comparativement à l'épaisseur du corps principal du joint ; lesdits fils métalliques (26) sont espacés l'un de l'autre mais très rapprochés l'un de l'autre dans la zone de proximité (34) et dans la zone du pont (20) ;
- lesdits fils métalliques (26) ayant une malléabilité relativement élevée et une haute conductibilité thermique et étant supérieurs en épaisseur d'au moins environ 10 à 20 % à l'épaisseur du corps principal (12) du joint avant la compression, de sorte que, dans la zone de proximité (34) et dans la zone du pont (20) ainsi qu'ailleurs, au moins une des branches (22, 24) du renforcement (14) fait quelque peu saillie sur le corps principal (12) du joint ;
- de telle manière qu'après l'assemblage du joint, les fils métalliques (26) sont déformés par précompression pour être serrer hermétiquement l'un contre l'autre dans la zone de proximité (34) pour établir une étanchéité efficace dans la zone de proximité (34) ;
- lesdits fils métalliques (26) sont serrés hermétiquement l'un contre l'autre après la compression, de sorte que l'espace entre les ouvertures de combustion (16) adjacentes peut être réduit à environ 3,56 mm (0,14 pouce).

2. Ensemble joint de culasse selon la revendication 1, dans lequel lesdites branches inférieures (22) desdites sections de renforcement sont en butée l'une contre l'autre dans ladite zone de proximité (34).

3. Ensemble joint de culasse selon la revendication 1, dans lequel lesdites branches inférieures (22) desdites sections de renforcement (18) sont à recouvrement dans ladite zone de proximité (34) pour produire ainsi une plus forte contrainte d'étanchéité dans la zone dudit recouvrement.

4. Ensemble joint de culasse selon la revendication 1, dans lequel lesdits fils métalliques (26) sont en cuivre.
